# EUROPÄISCHE PATENTSCHRIFT

(11) **EP 1 377 753 B1**
(45) Veröffentlichungstag und Bekanntmachung des Hinweises auf die Patenterteilung: **30.11.2005**
(21) Anmeldenummer: 02732529.9
(22) Anmeldetag: 27.03.2002
(51) Int. Cl.: F16B 13/08

(54) **VERFAHREN ZUR HERSTELLUNG EINES SPREIZANKERS**
METHOD FOR PRODUCING AN EXPANSION ANCHOR
PROCEDE DE FABRICATION D'UNE COQUILLE D'EXPANSION

(30) Priorität: 12.04.2001 DE 10118374
(43) Veröffentlichungstag der Anmeldung: 07.01.2004
(73) Patentinhaber: fischerwerke Artur Fischer GmbH & Co. KG, 72178 Waldachtal (DE)
(72) Erfinder: HAUG, Willi, 72250 Freudenstadt-Musbach (DE); SAIER, Walter, 72160 Horb-Grünmettstetten (DE)
(86) Internationale Anmeldenummer: PCT/EP2002/003405
(87) Internationale Veröffentlichungsnummer: WO 2002/084130

(56) Entgegenhaltungen:
- EP-A- 0 514 342
- EP-A- 0 717 203
- DE-A- 4 225 869
- DE-U- 29 805 837

## Beschreibung

Die Erfindung betrifft ein Verfahren zur Herstellung eines Spreizankers, der an seinem vorderen Ende einen mit einer Gleitbeschichtung versehenen Konus zur Aufweitung einer geschlitzten Spreizhülse und an seinem hinteren Ende ein Gewinde zur Befestigung eines Gegenstandes an einem Bauteil aufweist.

Ein derartiger Spreizanker ist aus der EP 0 514 342 B1 bekannt. Um ein sicheres Nachspreizverhalten in der gerissenen Zugzone zu erreichen, sind an der Außenkontur der Spreizhülse wenigstens ein Paar von zwei in Längsrichtung hintereinander liegenden Vorsprüngen angeordnet, und der Konus des Spreizankers mit einer reibungsmindernden Beschichtung versehen. Vor dem Aufbringen der Gleitschicht werden die durch Drehen oder Kaltverformung hergestellten Bolzen in einem Beizverfahren gereinigt, wobei es sich nicht immer vermeiden lässt, dass Ölrückstände am Bolzen verbleiben. Durch diese Ölrückstände wird die Haftung der Gleitschicht auf dem Bolzen beeinträchtigt, was zu Funktionsstörungen beim Nachspreizverhalten führt. Durch scharfe Kanten an der Spreizhülse kann außerdem die Gleitschicht beim Aufgleiten der Spreizhülse auf den Spreizkonus zumindest stellenweise beschädigt werden.

Der Erfindung liegt die Aufgabe zugrunde, das Herstellverfahren eines Spreizankers mit beschichtetem Konus dahingehend zu verbessern, dass einerseits eine bessere Haftung der Gleitbeschichtung erreicht wird, und anderseits eine Beschädigung der Gleitbeschichtung vermieden wird.

Die Aufgabe wird erfindungsgemäß durch die Merkmale des Anspruchs 1 gelöst. Nach dem Beizverfahren zur Beseitigung der Fertigungsrückstände wird der Konus in einer Vorrichtung mit rotierenden Stahlbürsten in der Weise bearbeitet, dass eine Rillenstruktur mit in einem Winkel zur Achsrichtung des Spreizankers verlaufenden Rillen entsteht. Durch Bearbeitung mit Stahlbürsten wird der Spreizkonus vollständig von Ölrückständen gereinigt und gleichzeitig die Rillenstruktur erzeugt, die eine gute Haftung der Gleitbeschichtung auf dem Spreizkonus bewirkt. Durch die in einem Winkel von vorzugsweise 45° verlaufende Rillenstruktur wird außerdem erreicht, dass die Spreizhülse beim Einziehen des Konuses nur auf den Erhebungen gleitet. Damit wird ein Abschaben der Gleitschicht verhindert und ein gleichmäßigeres Gleitverhalten erreicht.

Gleitbeschichtungen zur Sicherstellung des Nachspreizverhaltens in der gerissenen Zugzone sind insbesondere bei Spreizankern aus nichtrostendem Stahl erforderlich, da diese beim Aufgleiten der Spreizhülse auf den Konus bei hohem Druck besonders zum Kaltverschweißen neigen. Zur Bearbeitung von Spreizankern aus rostfreiem Stahl ist es zweckmäßig, Bürsten mit rostfreien Stahlborsten zu verwenden. Damit wird vermieden, dass der bei der Bearbeitung entstehende Abrieb der Bürsten sich als Roststaub auf der Oberfläche des Spreizankers festsetzt.

Das erfindungsgemäße Verfahren ist insbesondere für die Herstellung eines Spreizankers aus rostfreiem Stahl geeignet, der an seinem hinteren Abschnitt ein Gewinde und im vorderen Bereich einen im Durchmesser reduzierten Abschnitt aufweist, an den sich ein mit einer Gleitbeschichtung versehener Konus zur Aufweitung einer an ihrer Außenkontur Vorsprünge aufweisenden Spreizhülse anschließt. Aufgrund der in einem Winkel zur Achsrichtung des Spreizankers verlaufenden Rillenstruktur wird eine Beschädigung der Gleitbeschichtung insbesondere beim Aufspreizen des Spreizankers vermieden, so dass ein sicheres Nachspreizverhalten in der gerissenen Zugzone gewährleistet ist. Als besonders vorteilhaft hat sich eine Rillenstruktur mit einer Rautiefe von 10 *µ*m bis 20 *µ*m erwiesen.

Nachfolgend wird die Erfindung anhand eines Ausführungsbeispiels beschrieben. Es zeigen:
- Figur 1: den erfindungsgemäßen Spreizanker in Ansicht; und
- Figur 2: den in einem Bauteil verankerten Spreizanker nach Figur 1.

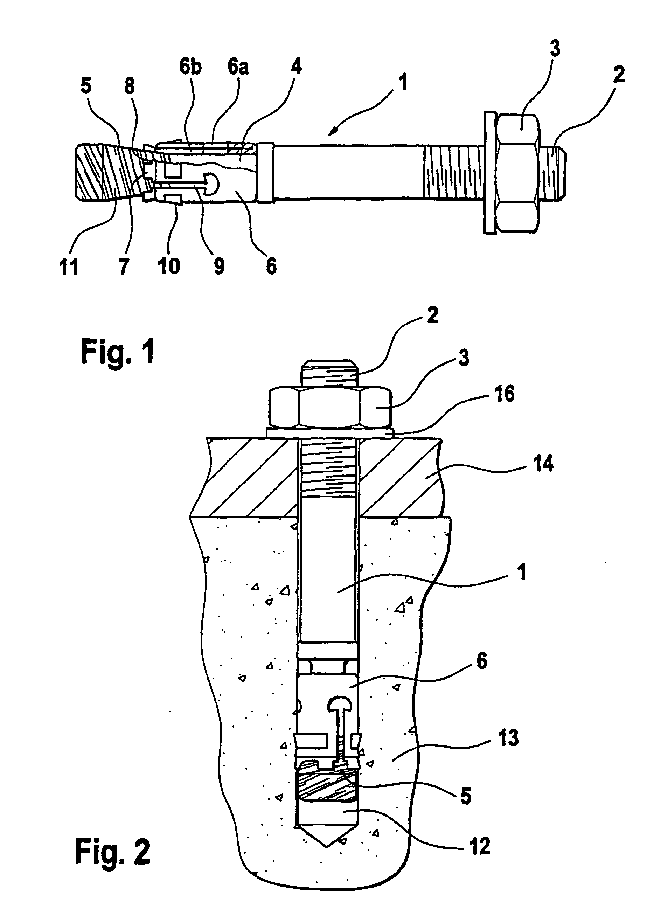

Figur 1 zeigt den Spreizanker mit einem Bolzenschaft 1, der an seinem hinteren Abschnitt ein Gewinde 2 mit einer aufgeschraubten Mutter 3 und im vorderen Bereich einen im Durchmesser reduzierten Abschnitt 4 aufweist, an den sich ein Konus 5 anschließt. Auf den im Durchmesser reduzierten Abschnitt 4 ist eine Spreizhülse 6 angeordnet, die aus einem dünnwandigen Blech in einem Biege- und Stanzwerkzeug hergestellt ist. Durch Zusammenfalten entsteht eine Doppelhülse mit einer Außenhülse 6a und einer Innenhülse 6b, wobei die Innenhülse 6b stirnseitig gegenüber der Außenhülse 6a übersteht. Dieser Überstand 7 ist durch rechteckige Ausnehmungen 8 zackenförmig ausgebildet. Zur Aufweitung der Spreizhülse 6 weist diese mehrere Schlitze 9 und zum Festsetzen im Bohrloch an ihrer Außenkontur Vorsprünge 10 auf.

Um einerseits eine bessere Haftung für die Gleitbeschichtung des Konus zu erreichen und anderseits beim Aufgleiten der Spreizhülse auf den Konus eine Zerstörung der Gleitschicht zu vermeiden ist der Spreizkonus 5 mit einer Rillenstruktur 11 versehen, die vorzugsweise in einem Winkel von 45° zur Achsrichtung des Spreizankers verläuft. Die Rillenstruktur 11 weist vorzugsweise eine Rautiefe von 10-20 µm auf. Die Rillenstruktur 11 am Spreizkonus 5 wird vor der Gleitbeschichtung mit rotierenden Stahlbürsten aufgebracht. Bei einem aus rostfreiem Stahl bestehenden Spreizanker werden Bürsten mit rostfreien Stahlborsten verwendet, um eine Korrosion an der Oberfläche des Konus durch den sich am Konus festsetzenden Abtrag von den Stahlbürsten zu vermeiden.

Nach der Bearbeitung des Konus 5 mit Stahlbürsten erfolgt die Beschichtung vorzugsweise mit einem auf einem Epoxydharz basierenden Harzsystem, dem noch Feststoffschmiermittel wie bspw. Grafit beigefügt sein können.

Figur 2 zeigt den in einem Bohrloch 12 eines Bauteils 13 verankerten Spreizanker und die Befestigung eines Gegenstandes 14 an dem Bauteil 13. Zum Setzen des Spreizankers wird dieser durch das Bohrloch 15 des zu befestigenden Gegenstandes 14 hindurch in das Bohrloch 12 des Bauteils 13 bis zum Aufsitzen der Unterlagscheibe 16 und der Mutter 3 auf dem Gegenstand 14 eingeschoben. Durch Aufschrauben der Mutter 3 bewegt sich der Bolzenschaft 1 in Richtung Bohrlochmündung, wobei der Spreizkonus 5 in die im Bohrloch 12 unverrückbar festsitzende Spreizhülse 6 eingezogen wird. Beim Einziehen des Konuses 5 wird die Spreizhülse 6 aufgeweitet und damit der Spreizanker im Bohrloch verankert. Tritt zu einem späteren Zeitpunkt durch Rissbildung eine Bohrlocherweiterung ein, bewirkt die am Bolzenschaft 1 angreifende Zuglast ein Nachrutschen des Konuses 5 in die Spreizhülse 6 und damit das Nachspreizen des Spreizankers.

## Patentansprüche

1. Verfahren zur Herstellung eines Spreizankers, der an seinem vorderen Ende einen mit einer Gleitbeschichtung versehenen Konus (5) zur Aufweitung einer geschlitzten Spreizhülse (6) und an seinem hinteren Ende ein Gewinde (2) zur Befestigung eines Gegenstandes an einem Bauteil aufweist, **dadurch gekennzeichnet, dass** vor dem Aufbringen der Gleitbeschichtung die Oberfläche des Konuses (5) mit Stahlbürsten in der Weise bearbeitet wird, dass eine Rillenstruktur (11) mit parallel verlaufenden Rillen entsteht.

2. Verfahren nach Anspruch 1, **dadurch gekennzeichnet, dass** die Rillenstruktur (11) in einem Winkel von vorzugsweise 45° zur Achsrichtung des Spreizankers verläuft.

3. Verfahren nach Anspruch 1, **dadurch gekennzeichnet, dass** zur Bearbeitung Bürsten mit rostfreien Stahlborsten verwendet werden.

4. Spreizanker aus rostfreiem Stahl mit einem Gewinde (2) an seinem hinteren Abschnitt und einem im Durchmesser reduzierten Abschnitt (4) im vorderen Bereich, an den sich ein mit einer Gleitbeschichtung versehener Konus (5) zur Aufweitung einer an ihrer Außenkontur Vorsprünge (10) aufweisenden Spreizhülse (6) anschließt, **dadurch gekennzeichnet, dass** der Konus (5) eine Rillenstruktur (11) aufweist, die in einem Winkel zur Achsrichtung des Spreizankers verläuft.

5. Spreizanker nach Anspruch 4, **dadurch gekennzeichnet, dass** die Rillenstruktur (11) eine Rautiefe von 10-20 µm aufweist.

## Claims

1. Method of producing an expansible anchor having, at its front end, a cone (5), provided with a low-friction coating, for expansion of a slit expansion sleeve (6) and having, on its rear end, a thread (2) for fastening an article to a building component, **characterised in that**, before application of the low-friction coating, the surface of the cone (5) is so treated with steel brushes that a score structure (11) having scores oriented in parallel is formed.

2. Method according to claim 1, **characterised in that** the score structure (11) is oriented at an angle of preferably 45° to the axial direction of the expansible anchor.

3. Method according to claim 1, **characterised in that** brushes having stainless steel bristles are used for the treatment.

4. Expansible anchor made from stainless steel having, on its rear portion, a thread (2) and having, in the front region, a portion (4) of reduced diameter, which is adjacent to a cone (5), provided with a low-friction coating, for expansion of an expansion sleeve (6) having protrusions (10) on its external contour, **characterised in that** the cone (5) has a score structure (11) oriented at an angle to the axial direction of the expansible anchor.

5. Expansible anchor according to claim 4, **characterised in that** the score structure (11) has a surface roughness depth of 10 - 20 µm.

## Revendications

1. Procédé de fabrication d'un boulon d'ancrage à expansion, dont l'extrémité antérieure comporte un cône (5), revêtu d'une couche anti-friction et destiné à élargir une douille expansible (6) fendue, et dont l'extrémité postérieure comporte un filetage (2) pour la fixation d'un objet contre un élément de construction, **caractérisé en ce que**, avant le dépôt du revêtement anti-friction, la surface du cône (5) est traitée au moyen de brosses en acier, de manière à former une structure cannelée (11) avec des cannelures orientées parallèlement.

2. Procédé selon la revendication 1, **caractérisé en ce que** la structure cannelée (11) est orientée selon un angle de 45°, de préférence, par rapport à l'axe du boulon d'ancrage à expansion.

3. Procédé selon la revendication 1, **caractérisé en ce que** l'on utilise pour le traitement des brosses avec des poils en acier inoxydable.

4. Boulon d'ancrage à expansion en acier inoxydable, comportant un filetage (2) sur sa partie postérieure et un tronçon (4) à plus petit diamètre dans sa partie antérieure, lequel est prolongé par un cône (5) destiné à élargir une douille expansible (6) munie d'ergots (10) sur son contour extérieur, **caractérisé en ce que** le cône (5) comporte une structure cannelée (11) qui est orientée en formant un angle avec l'axe du boulon d'ancrage à expansion.

5. Boulon d'ancrage à expansion selon la revendication 4, **caractérisé en ce que** la structure cannelée (11) a une profondeur de rugosité de 10 à 20 µm.
